# EUROPÄISCHE PATENTANMELDUNG

(11) **EP 1 029 660 A1**
(43) Veröffentlichungstag der Anmeldung: **23.08.2000**
(21) Anmeldenummer: 99810141.4
(22) Anmeldetag: 17.02.1999
(51) Int. Cl.: B32B 15/08, B32B 27/36, B65D 65/40

(54) **Verbundfolie und Verfahren zu ihrer Herstellung**

(71) Anmelder: Alusuisse Technology & Management AG, 8212 Neuhausen am Rheinfall (CH)
(72) Erfinder: Lohwasser, Wolfagng, 78262 Gailingen (DE); Gerber, Manfred, 78224 Singen (DE); Nägeli, Hans-Rudolf, 8212 Neuhausen am Rheinfall (CH)

(57) **Zusammenfassung**

Eine Verbundfolie (10) umfasst eine Kunststofffolie (12), die gegebenenfalls auf wenigstens einer Seite mit einem mittels eines Vakuumdünnschichtverfahrens abgeschiedenen keramischen Material (14) beschichtet ist und eine auf die Kunststofffolie bzw. auf die gegebenenfalls vorhandene Schicht extrusions-beschichtete Kunststoffschicht (18), wobei die keramische Schicht zwischen der Kunststofffolie (12) und der extrudierten Schicht (18) angeordnet ist. Zur Verbesserung der Haftfestigkeit ist zwischen der Kunststofffolie (12) bzw. der gegebenenfalls vorhandenen keramischen Schicht (14) eine Metallschicht (16) aus Chrom, Aluminium, Nickel, Titan, Eisen, Molybdän oder einer aus wenigstens zwei dieser Metalle zusammengesetzten Legierung als Haftvermittler angeordnet. Eine dünne Metallschicht, die eine einer monoatomaren Belegung entsprechende Schichtdicke von 0.1 bis 0.5nm aufweist, ist bereits ausreichend.

## Beschreibung

Die Erfindung betrifft eine Kunststoffverbundfolie mit einer gegebenenfalls auf wenigstens einer Seite mit einem mittels eines Vakuumdünnschichtverfahrens abgeschiedenen keramischen Material beschichteten Kunststofffolie und einer auf die Kunststofffolie bzw. auf die gegebenenfalls vorhandene keramische Schicht extrusionsbeschichteten Kunststoffschicht, wobei die keramische Schicht zwischen der Kunststofffolie und der extrudierten Schicht angeordnet ist. Im Rahmen der Erfindung liegt auch ein Verfahren zur Herstellung einer Verbundfolie .

Kunststoffverbundfolien aus einer Substratfolie und einer mittels Extrusionsbeschichtung oder Kaschierung aufgebrachten Schicht zeigen eine für viele Anwendungen nicht ausreichende Haftung der extrudierten Schicht auf der Substratfolie.

Es ist bekannt, dass zur Verbesserung der Haftung zwischen einer Substratfolie und einer mittels Extrusionsbeschichtung aufgebrachten Kunststoffschicht häufig haftungsfreudig modifizierte Co- und Terpolymere aus Ethylen oder Propylen eingesetzt werden.

Damit eine Kunststoffverbundfolie beispielsweise als siegelbare Folie für Verpackungsanwendungen verwendet werden kann, ist die Siegelnahtfestigkeit von entscheidender Bedeutung.

Der vorliegenden Erfindung liegt deshalb die Aufgabe zugrunde, eine Kunststoffverbundfolie der eingangs genannten Art zu schaffen, die eine im Vergleich zu Kunststoffverbundfolien nach dem Stand der Technik höhere Haftfestigkeit zwischen der Extrusionsschicht und der Substratfolie aufweist. Ein weiteres Ziel der Erfindung ist die Bereitstellung eines zur Herstellung einer derartigen Kunststoflverbundfolie geeigneten Verfahrens.

Zur erfindungsgemässen Lösung der Aufgabe führt, dass zwischen der Kunststofffolie bzw. der gegebenenfalls vorhandenen keramischen Schicht eine Metallschicht aus Chrom, Aluminium, Nickel, Titan, Eisen, Molybdän oder einer aus wenigstens zwei dieser Metalle zusammengesetzten Legierung als Haftvermittler angeordnet ist. Bevorzugte Metalle sind Chrom und Aluminium, wobei Chrom besonders bevorzugt ist. Eine bevorzugte Legierung ist V2A-Stahl.

Überraschenderweise hat sich gezeigt, dass bereits eine monoatomare Metallschicht für eine gute Haftung ausreichend ist. Monoatomar heisst dabei nicht, dass die Atome in einer monoatomaren Lage angeordnet sein müssen. Vielmehr bilden sich wie bei allen Kondensationsprozessen Cluster von Atomen. Unter einer monoatomaren Schicht wird hier eine Flächenbelegung verstanden, die zu einer annähernd monoatomaren Lage führen würde, wenn man die Atome gleichmässig über die Substratfläche verteilen würde.

Obschon auch dickere Metallschichten Verwendung finden können, wird aus Kostengründen und zur Gewährleistung einer hohen optischen Transparenz eine einer monoatomaren Belegung entsprechende Schichtdicke von 0.1 bis 0.5nm bevorzugt. Ebenfalls überraschend ergibt sich selbst bei einer Schichtdicke von 0.2nm dieselbe Haftfestigkeit, wie sie bei dickeren Schichten einer Dicke von 1nm und grösser beobachtet wird. Die 0.2nm dicken Schichten beeinträchtigen die optische Transparenz der fertigen Verbundfolie nahezu nicht, sind also für das menschliche Auge unsichtbar.

Bei einer erfindungsgemässen, beispielsweise für Verpackungszwecke vorgesehene Kunststoffverbundfolie kann die Kunststofffolie zur Erzielung einer guten Durchtrittssperrwirkung für Wasserdampf und Gase mit einer keramischen Schicht aus SiOₓ, wobei x eine Zahl zwischen 0.9 und 2, vorzugsweise einer Zahl zwischen 1.5 und 1.8 ist, beschichtet sein. Diese zwischen der Kunststoffolie und der Metallschicht angeordnete keramische Schicht beeinflusst die durch die Metallschicht erhöhte Haftfestigkeit in keiner Weise.

Bei einem bevorzugten Aufbau der Kunststoffverbundfolie besteht die Extrusionsbeschichtungsschicht aus wenigstens einem der Kunststoffe Polyethylen (PE) oder haftungsfreudig modifizierten Co- und Terpolymeren mit Ethylen (E) oder Propylen (P) als einer der Monomerkomponenten, insbesondere aus E.AA, E.MAA, E.VA, E.MA, E.EA, E.nBA, E.CO, E.VA.CO, E.nBA.CO, E.AE.AA, P.MAH, lonomere und dergleichen, wobei bevorzugt E.AA eingesetzt wird. PE oder die genannten Co- und Terpolymere können alleine oder als durch Coextrusion oder durch Extrusionskaschierung aufgebrachte Verbindungsschicht zu anderen bahnförmigen Materialien eingesetzt werden. Auch können durch PE oder die genannten Co- und Terpolymere zwei oder mehrere mit einer erfindungsgemässen Metallschicht beschichtete Filme bzw. Folien verbunden werden.

Die genannten Monomerkomponenten bedeuten:
- AA: Acrylsäure
- AE: Acrylester (MA, EA, BA)
- nBA: n-Butylacrylat
- CO: Kohlenmonoxid
- EA: Ethylacrylat
- MA: Methylacrylat
- MAA: Methylacrylsäure
- MAH: Maleinsäureanhydrid
- VA: Vinylacetat.

Die Kunststofffolie der erfindungsgemässen Verbundfolie besteht beispielsweise aus einem Polyester, insbesondere aus Polyethylenterephtalat (PET), aus orientiertem Polyamid (oPA), orientiertem Polypropylen (oPP) oder dergleichen.

Selbstverständlich kann die erfindungsgemässe Verbundfolie beidseitig weitere Schichten aus Kunststoff oder beispielsweise Lackschichten, die auch bedruckt sein können, aufweisen.

Zur erfindungsgemässen Lösung führt bezüglich des Verfahrens, das vor dem Extrusionsbeschichten eine Metallschicht aus Chrom, Aluminium, Nickel, Titan, Eisen, Molybdän oder einer aus wenigstens zwei dieser Metalle zusammengesetzten Legierung mittels eines Vakuumdünnschichtverfahrens als Haftvermittler auf der Kunststoffolie bzw. auf der gegebenenfalls vorhandenen keramischen Schicht abgeschieden wird.

Die dünne Metallschicht wird vorzugsweise durch Aufdampfen oder Sputtern abgeschieden, wobei Sputtern bevorzugt wird.

Vorzugsweise wird die Metallschicht in einer einer monoatomaren Belegung entsprechenden Menge mit einer Schichtdicke von etwa 0.1 bis 0.5nm abgeschieden.

Bei einer zweckmässigen Ausführung des erfindungsgemässen Verfahrens wird die Metallschicht in Linie mit einem anderen Vakuumdünnschichtverfahren zur Erzielung einer anderen Eigenschaft, insbesondere mit einem Vakuumdünnschichtverfahren zur Abscheidung eines keramischen Materials auf der Kunststofffolie abgeschieden. Da eine sehr dünne Metallschicht für eine gute Haftung bereits ausreicht ist es möglich, diese Schicht mit einer Sputterkathode bei sehr hohen Bandgeschwindigkeiten, die mit dem Aufdampfprozess kompatibel sind, zu sputtern.

Durch die geringe erforderliche Schichtdicke der Metallschicht ist es möglich, dass man eine Beschichtungsquelle ohne Beschichtungswalze zwischen zwei Umlenkwalzen anordnet (Free-Span-Betrieb). Die Beschichtungsquellen, z.B. zwei Sputterkathoden, können auch so angeordnet werden, dass beide Seiten der Kunststoffolie mit einer dünnen Metallschicht als Haftvermittler versehen werden können.

Es ist erfindungsgemäss auch möglich, die Extrusionsbeschichtung ebenfalls in Linie im Vakuum auszuführen. Dazu muss allerdings die zu extrudierende Schmelze vor der Extrusion entgast werden, was zweckmässig im Extruder mittels marktgängigen Doppelschneckenextrudern mit Vakuum-Entgasung erfolgt.

Weitere Vorteile, Merkmale und Einzelheiten der Erfindung ergeben sich aus den nachfolgenden Beispielen, der Beschreibung sowie anhand der Zeichnung; diese zeigt schematisch in
- Fig.1: den Aufbau einer erfindungsgemässen Verbundfolie;
- Fig. 2: eine Vorrichtung zur Durchführung des erfindungsgemässen Verfahrens.

### Beispiel 1

Eine 12µm dicke Polyesterfolie aus Polyethylenterephtalat (PET) wird in Linie zuerst mittels eines Sauerstoffplasmas vorbehandelt, anschliessend mit 80nm SiO_{1.8} mittels Elektronenstrahl-Bedampfung beschichtet. Danach erfolgt eine Beschichtung mit Chrom. Die Bandgeschwindigkeit beträgt 200 m/min, die Beschichtungsbreite liegt bei 690 mm. Die Beschichtung mit Chrom erfolgt auf derselben Beschichtungswalze, auf der auch die SiO_{1.8} -Beschichtung durchgeführt wird, mittels einer DC-Magnetronsputterkathode (PK750 von Leybold), auf der eine Chrom-Platte als Target aufgelötet ist. Die Abscheidung erfolgt in einer Argon-Atmosphäre bei 3.10 ⁻³ mbar. Die elektrische Leistung für die Sputterkathode beträgt 10kW. Unter diesen Bedingungen ergibt sich eine Schichtdicke von etwa 1.5 Angström (0.15nm).

Die so im Vakuum beschichtete Folie wird anschliessend in einem separaten Arbeitsschritt in einer Coextrusionsbeschichtungsanlage mit 10µm E.AA/15µm LDPE (low density polyethylen) extrusionsbeschichtet. Die Schichtdicke beträgt 25µm. Die Schichten lassen sich nicht trennen.

Zur Überprüfung der Eignung für Verbundfolie für Verpackungsanwendungen wurden zwei derart beschichtete Folien mit der mit PE beschichteten Seite unter Einwirkung von Druck und Wärme gegeneinander gesiegelt. Die gemessene Siegelnahtfestigkeit nach DIN 53539 betrug 16.3N/15mm.

### Beispiel 2

Die Herstellung einer Verbundfolie erfolgt wie in Beispiel 1, wobei die Extrusionsbeschichtung nur mit PE ohne E.AA durchgeführt. Die gemessene Siegelnahtfestigkeit betrug 11.3N/15mm.

### Beispiel 3 (Vergleichsbeispiel )

Die Herstellung einer Verbundfolie erfolgt wie in Beispiel 1, jedoch ohne Beschichtung mit Chrom. Die anschliessende Coextrusionsbeschichtung mit PE oder E.AA ergibt keine ausreichende Haftung.

### Beispiel 4

Eine 15µm dicke Folie aus orientiertem Polyamid (oPA) wird entsprechend Beispiel 1 beschichtet. Die anschliessende Extrusionsbeschichtung mit PE oder E.AA ergibt ebenfalls hervorragende Haftungswerte von >10N/15mm.

### Beispiel 5

Eine 12µm dicke PET-Folie wird gemäss Beispiel 1 beschichtet. Zusätzlich befindet sich jedoch in der Vakuum-Bedampfungsanlage noch eine weitere Sputterkathode, die im "Free-Span" auch die Rückseite der Folie mit Chrom beschichtet. Dadurch ergibt sich eine Folie, die von beiden Seiten extrusionsbeschichtbar ist. Die Folie wird von beiden Seiten mit je einer 100µm dicken Schicht aus E.AA/LDPE coextrusionsbeschichtet oder extrusionskaschiert. Dadurch erhält man ein aluminiumfreies Laminat mit hervorragender Sperrwirkung gegen Gase und Aromastoffe für Zahnpastatuben.

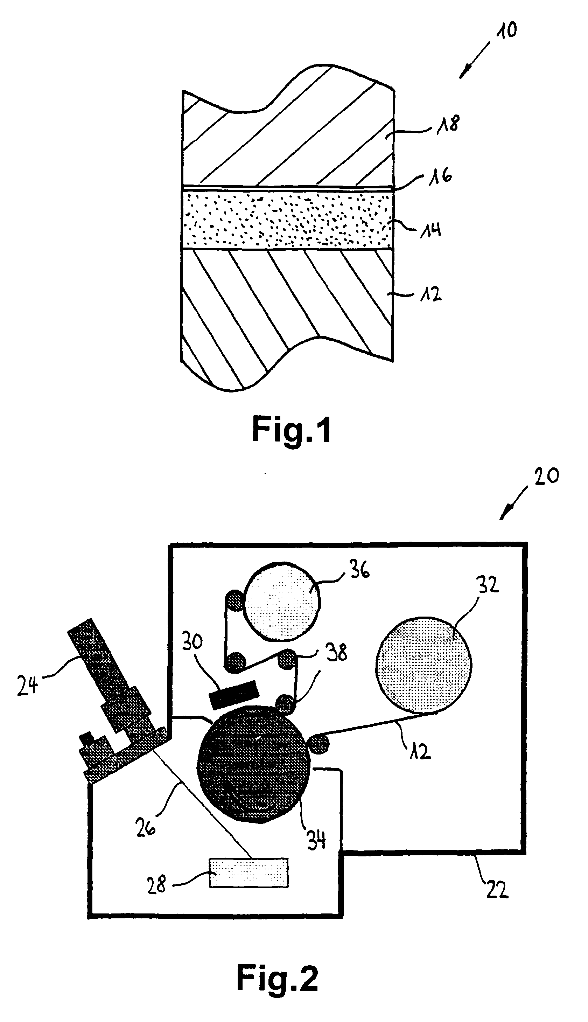

Eine in Fig. 1 gezeigte Kunststoffverbundfolie 10 umfasst eine beispielsweise 12µm dicke Kunststofffolie 12 aus PET, beschichtet mit einer keramischen Schicht aus SiOₓ, wobei x beispielsweise 1.8 ist. Auf der keramischen Schicht 14 ist eine beispielsweise 0.2nm dicke, durch Sputtern aufgetragene Metallschicht 16 aus Chrom angeordnet. Die Metallschicht 16 dient als Haftvermittler zu einer Extrusionsschicht 18 aus beispielsweise PE oder E.AA.

Eine in Fig. 2 dargestellte Beschichtungsanlage 20 weist eine Vakuumkammer 22 auf. Ein von einer Elektronenstrahlkanone 24 emittierter Elektronenstrahl 26 wird auf das in einem Tiegel oder in einer Platte vorhandene Material 28 gelenkt, wobei sich das Material 28 zur Erzeugung der keramischen Schicht 14 durch die Energie des auftreffenden Elektronenstrahls 26 erhitzt und verdampft.

Innerhalb der Vakuumkammer ist auch ein zur Bildung der dünnen Metallschicht erforderliches Metall bzw. die Legierung in Form einer Metallplatte auf einer Sputterkathode 30 aufgelötet. In der Vakuumkammer 22 wird eine Argon-Atmosphäre bei einem Druck von 3.10⁻³mbar aufrechterhalten. Die elektrische Leistung für die Sputterkathode wird der erfindungsgemässen Schichtdicke entsprechend eingestellt.

Innerhalb der Vakuumkammer wird die Kunststofffolie 12 von einer ersten Rolle 32 abgewickelt und über eine Walze 34 gezogen. Die auf der Walze 34 als Substratträger aufliegende Kunststofffolie 12 bildet im Arbeitsbereich eine Substratfläche, auf welcher das vom Elektronenstrahl 26 der Elektronenstrahlkanone 24 verdampfte Material 28 in Form der keramischen Schicht 14 abgeschieden wird. Auf die auf der Kunststofffolie 12 niedergeschlagenen keramische Schicht 14 wird die dünne Metallschicht 16 durch Sputtern aufgetragen. Nach erfolgter Beschichtung mit der keramischen Schicht 14 und der Metallschicht 16 wird die derart beschichtete Kunststofffolie 12 auf eine weitere Rolle 36 aufgewickelt. Zur Führung der Kunststofffolie 12 sind Umlenkrollen 38 vorgesehen. Die Bandgeschwindigkeit der Kunststofffolie 12 in der Vakuumkammer 22 liegt beispielsweise bei etwa 400m/min. Die auf die Rolle 36 aufgewickelte, mit der keramischen Schicht 14 und der Metallschicht 16 beschichteten Kunststofffolie 12 wird anschliessend - in der Zeichnung aus Gründen der besseren Übersicht nicht dargestellt - zum Auftragen der Extrusionsschicht 18 einer Extrusionsbeschichtungsanlage zugeführt.

## Patentansprüche

1. Kunststoffverbundfolie mit einer gegebenenfalls auf wenigstens einer Seite mit einem mittels eines Vakkuumdünnschichtverfahrens abgeschiedenen keramischen Material (14) beschichteten Kunststofffolie und einer auf die Kunststofffolie bzw. auf die gegebenenfalls vorhandenen keramische Schicht extrusionsbeschichteten Kunststoffschicht (18), wobei die keramische Schicht (14) zwischen der Kunststofffolie (12) und der extrudierten Schicht (18) angeordnet ist,
dadurch gekennzeichnet, dass
zwischen der Kunststofffolie (12) bzw. der gegebenenfalls vorhandenen keramischen Schicht (14), eine Metallschicht (16) aus Chrom, Aluminium, Nickel, Titan, Eisen, Molybdän oder einer aus wenigstens zwei dieser Metalle zusammengesetzten Legierung als Haftvermittler angeordnet ist.

2. Kunststoffverbundfolie nach Anspruch 1, dadurch gekennzeichnet, dass die Metallschicht (16) eine einer monoatomaren Belegung entsprechende Schichtdicke von 0.1 bis 0.5nm aufweist.

3. Kunststoffverbundfolie nach Anspruch 1,oder 2, dadurch gekennzeichnet, dass die Kunststofffolie (12) mit einer keramischen Schicht (14) aus SlOₓ, wobei x eine Zahl zwischen 0.9 und 2, vorzugsweise eine Zahl zwischen 1.5 und 1.8 ist, beschichtet ist.

4. Kunststoffverbundfolie nach einem der Ansprüche 1 bis 3, dadurch gekennzeichnet, dass die Extrusionsschicht (18) aus wenigstens einem der Kunststoffe PE oder Co-/Terpolymere mit Ethylen (E) oder Propylen (P) als einer der Monomerkomponenten, insbesondere aus E.AA, E.MAA, E.VA, E.MA, E.EA, E.nBA, E.CO, E.VA.CO, E.nBA.CO, E.AE.AA oder P.MAH besteht, wobei AA Acrylsäure, AE Acrylester (MA, EA, BA), nBA n-Butylacrylat, CO Kohlenmonoxid, EA Ethylacrylat, MA Methylacrylat, MAA Methylacrylsäure, MAH Maleinsäureanhydrid und VA Vinylacetat bedeuten.

5. Kunststoffverbundfolie nach einem der Ansprüche 1 bis 4, dadurch gekennzeichnet, dass die Kunststofffolie (12) aus einem Polyester, insbesondere aus Polyethylenterephtalat (PET), aus orientiertem Polyamid (oPA) oder aus orientiertem Polypropylen (oPP) besteht.

6. Verfahren zur Herstellung einer Kunststoffverbundfolie (10) mit einer gegebenenfalls auf wenigstens einer Seite mit einem mittels eines Vakuumdünnschichtverfahrens abgeschiedenen keramischen Material (14) beschichteten Kunststofffolie (12) und einer auf die Kunststofffolie bzw. auf die gegebenenfalls vorhandene keramische Schicht extrudierten Kunststoffschichte (18), wobei die keramische Schicht (14) zwischen der Kunststofffolie (12) und der extrudierten Schicht (18) angeordnet ist,
dadurch gekennzeichnet, dass
vor dem Extrusionsbeschichten eine Metallschicht (16) aus Chrom, Aluminium, Nickel, Titan, Eisen, Molybdän oder einer aus wenigstens zwei dieser Metalle zusammengesetzten Legierung mittels eines Vakuumdünnschichtverfahrens als Haftvermittler auf der Kunststofffolie (12) bzw. auf der gegebenenfalls vorhandenen keramischen Schicht (14) abgeschieden wird.

7. Verfahren nach Anspruch 6, dadurch gekennzeichnet, dass die Metallschicht (16) durch Aufdampfen oder Sputtern abgeschieden wird.

8. Verfahren nach Anspruch 6 oder 7, dadurch gekennzeichnet, dass die Metallschicht (16) in einer einer monoatomaren Belegung entsprechenden Menge mit einer Schichtdicke von etwa 0.1 bis 0.5nm abgeschieden wird.

9. Verfahren nach einem der Ansprüche 6 bis 8, dadurch gekennzeichnet, dass die Metallschicht (16) in Linie mit einem anderen Vakuumdünnschichtverfahren zur Erzielung einer anderen Eigenschaft, insbesondere mit einem Vakuumdünnschichtverfahren zur Abscheidung eines keramischen Materials (14) auf der Kunststofffolie (12), abgeschieden wird.

10. Verfahren nach einem der Ansprüche 6 bis 9, dadurch gekennzeichnet, dass das Extrusionsbeschichten in Linie mit der mittels eines Vakuumdünnschichtverfahrens abgeschiedenen Metallschicht (16) im Vakuum durchgeführt wird.
